# EUROPEAN PATENT APPLICATION

(11) **EP 2 692 750 A1**
(43) Date of publication of application: **05.02.2014**
(21) Application number: 12764488.8
(22) Date of filing: 28.03.2012
(51) Int. Cl.: C08F 214/00, C08F 2/26, C08F 218/08

(54) **METHOD FOR PRODUCING FLUORINE-CONTAINING COPOLYMER**

(30) Priority: 31.03.2011 JP 2011080672
(71) Applicant: Daikin Industries, Ltd., Osaka-shi, Osaka 530-8323 (JP)
(72) Inventor: IMAHORI Yuji, Osaka-shi Osaka 530-8323 (JP); YOSHIDA Hirotoshi, Osaka-shi Osaka 530-8323 (JP); IIDA Mayumi, Osaka-shi Osaka 530-8323 (JP); ITO Kengo, Osaka-shi Osaka 530-8323 (JP); TANAKA Yoshito, Osaka-shi Osaka 530-8323 (JP); IMOTO Katsuhiko, Osaka-shi Osaka 530-8323 (JP); KAWABE Takuma, Osaka-shi Osaka 530-8323 (JP)
(74) Representative: HOFFMANN EITLE
(86) International application number: PCT/JP2012/058238
(87) International publication number: WO 2012/133582

(57) **Abstract**

The present invention provides a method for producing a copolymer containing a perhaloolefin and vinyl acetate by a novel emulsion polymerization method. The present invention relates to a method for producing a perhaloolefin-vinyl acetate copolymer by emulsion polymerization of at least a perhaloolefin having two carbon atoms and vinyl acetate in the presence of a hydrocarbon emulsifier or in the absence of an emulsifier, provided that the hydrocarbon emulsifier excludes a compound (1) represented by the formula (1):
[Chem. 1] 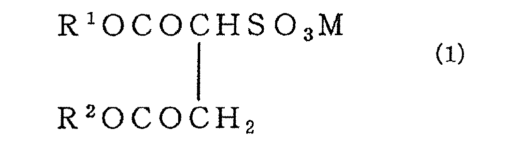 wherein R¹ and R² are the same as or different from each other and each represent a C4 to 12 unfluorinated saturated hydrocarbon group; M represents an alkali metal, an ammonium salt, or an amine salt.

## Description

### TECHNICAL FIELD

The present invention relates to a method for producing a copolymer that contains a perhaloolefin and vinyl acetate by a novel emulsion polymerization method.

### BACKGROUND ART

Fluorocopolymers show remarkable chemical resistance, solvent resistance, heat resistance, and antifouling property, and these properties enable fluorocopolymers to be widely used as materials of various products in various industrial fields such as automobile, semiconductor, chemical, and coating industries.

These fluorocopolymers are produced by emulsion polymerization, suspension polymerization, or solution polymerization of fluoroolefins. Typical emulsion polymerization needs a surfactant. Increased use of a surfactant proportionally increases the number of polymer particles generated at the initial stage of emulsion polymerization. This promotes the polymerization velocity, leading to improvement of the productivity of the resulting fluorocopolymer. However, too much use of a surfactant tends to reduce the properties (i.e. water resistance) of the resulting fluorocopolymer. Accordingly, novel methods have been desired which enable efficient polymerization with a small amount of a surfactant without adverse effects on the properties of resulting fluorocopolymers.

Due to these circumstances, expensive ammonium perfluorooctanoate is used for emulsion polymerization of copolymers of a fluoroolefin and vinyl acetate (Patent Literatures 1 to 3).

There are some examples in which an unfluorinated emulsifier is used for emulsion polymerization of fluoroolefin copolymers. For example, Patent Literature 4 proposes a method for producing a fluorocopolymer using a linear aliphatic sulfonate surfactant. Patent Literature 5 proposes a method using an alkyl phosphonic acid or an ester of the same as an unfluorinated surfactant. Patent Literature 6 proposes a method using a compound of a quaternary carbon atom with phosphoric acid, sulfonic acid, or carboxylic acid. However, no examples applied for copolymerization of a fluoroolefin and vinyl acetate have been seen to date.

### CITATION LIST

### - Patent Literature

Patent Literature 1: US 5,070,162 B
Patent Literature 2: US 5,032,656 B
Patent Literature 3: JP 3,937,449 B
Patent Literature 4: US 6,512,063 B
Patent Literature 5: US 2007/0,032,591 A
Patent Literature 6: WO 2005/063827 A

### SUMMARY OF INVENTION

### - Technical Problem

The present invention aims to provide a method for producing a copolymer that contains a perhaloolefin and vinyl acetate through a novel emulsion polymerization method.

### - Solution to Problem

Specifically, the present invention relates to a method for producing a perhaloolefin-vinyl acetate copolymer, including the step of emulsion polymerization of at least a perhaloolefin having two carbon atoms and vinyl acetate in the presence of a hydrocarbon emulsifier or in the absence of an emulsifier, provided that the hydrocarbon emulsifier excludes a compound represented by the formula (1):
[Chem.1] 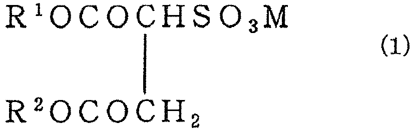
wherein R¹ and R² are the same as or different from each other and each represent a C4 to 12 unfluorinated saturated hydrocarbon group; M represents an alkali metal, an ammonium salt, or an amine salt.

Examples of the hydrocarbon emulsifier include sodium dodecylsulfate, sodium dodecylsulfonate, sodium decylsulfate, sodium decylsulfonate, sodium tetradecylsulfate, and sodium tetradecanesulfonate.

### - Advantageous Effects of Invention

The present invention enables production of a fluoropolymer without an expensive fluorine-containing emulsifier which is generally used in emulsion polymerization of fluoropolymers.

### DESCRIPTION OF EMBODIMENTS

The point of the method for producing a perhaloolefin-vinyl acetate copolymer of the present invention is that, in emulsion polymerization of at least a perhaloolefin having two carbon atoms and vinyl acetate to produce a copolymer, the copolymerization is carried out in the presence of a specific hydrocarbon emulsifier or in the absence of an emulsifier.

The monomers to be polymerized in the production method of the present invention are a perhaloolefin having two carbon atoms, vinyl acetate, and, optionally, an unfluorinated monomer copolymerizable with these monomers.

The perhaloolefin having two carbon atoms is preferably tetrafluoroethylene (TFE) or chlorotrifluoroethylene (CTFE).

In the case of a binary copolymer of a perhaloolefin and vinyl acetate, in other words, in the case where the perhaloolefin-vinyl acetate copolymer consists of one kind of perhaloolefin and vinyl acetate, the ratio of perhaloolefin/vinyl acetate (mol% ratio) is preferably 20 to 80/80 to 20, and more preferably 35 to 65/65 to 35.

Examples of the copolymerizable unfluorinated monomer include monomers not containing a crosslinkable group (i.e. unfluorinated vinyl monomers) and unfluorinated monomers containing a crosslinkable group.

Examples of the unfluorinated vinyl monomer include olefins such as ethylene, propylene, isobutylene, and n-butene; vinyl ethers such as ethyl vinyl ether, cyclohexyl vinyl ether, and methyl vinyl ether; and vinyl esters such as vinyl versatate, vinyl benzoate, vinyl pivalate, vinyl lauriate, vinyl stearate, and vinyl cyclohexyl carboxylate. Particularly preferable are ethyl vinyl ether, cyclohexyl vinyl ether, and vinyl versatate because when the resulting copolymer is used for a coating, some of its properties are improved, such as compatibility, coating film hardness, transparency of coating films, and film formability.

Examples of the unfluorinated monomer containing a crosslinkable group include unsaturated carboxylic acids such as undecylenic acid, crotonic acid, maleic acid, maleic acid monoester, vinyl acetic acid, cinnamic acid, 3-allyloxypropionic acid, itaconic acid, and itaconic acid monoester; and hydroxyl group-containing vinyl monomers such as 2-hydroxyethyl vinyl ether, 3-hydroxypropyl vinyl ether, 2-hydroxypropyl vinyl ether, 2-hydroxy-2-methyl propyl vinyl ether, 4-hydroxybutyl vinyl ether, 4-hydroxy-2-methyl butyl vinyl ether, 5-hydroxypentyl vinyl ether, 6-hydroxyhexyl vinyl ether, 2-hydroxyethyl allyl ether, 4-hydroxybutyl allyl ether, and glycerol monoallyl ether. In particular, preferable are 2-hydroxyethyl vinyl ether, 4-hydroxybutyl vinyl ether, undecylenic acid, and crotonic acid, in terms of excellence in polymerization reactivity and curability.

In the case of a ternary or higher-order copolymer of a perhaloolefin, vinyl acetate, and the unfluorinated monomer(s), the ratio of (perhaloolefin) / (total amount of vinyl acetate and the unfluorinated monomer(s)) (mol% ratio) is preferably 20 to 80/80 to 20, and more preferably 35 to 65/65 to 35.

The amount of the monomer unit based on the unfluorinated monomer containing a crosslinkable group is preferably 0.1 to 10 mol% in the copolymer, and more preferably, in terms of improvement in solvent resistance and weather resistance of a resulting cured coating film, 1 to 10 mol% in the copolymer.

The emulsion polymerization in the present invention is carried out in the presence of a hydrocarbon emulsifier, or in the absence of an emulsifier.

The simple expression "emulsifier" herein includes not only hydrocarbon emulsifiers but also fluorine-containing emulsifiers and other emulsifiers. In other words, "emulsifier" includes various compounds generally called emulsifiers. Accordingly, the expression "emulsion polymerization is carried out in the absence of an emulsifier" means that emulsion polymerization is carried out without using the compounds generally categorized as emulsifiers at all.

Usable as the hydrocarbon emulsifier are hydrocarbon emulsifiers excluding a compound (1) shown below.

Compound (1): a compound represented by the formula (1)
[Chem. 2] 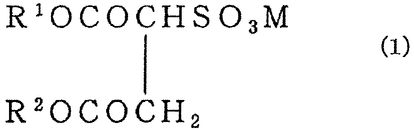
In the formula, R¹ and R² are the same as or different from each other and each represent a C4 to 12 unfluorinated saturated hydrocarbon group; M represents an alkali metal, an ammonium salt, or an amine salt.

Examples of the compound represented by the formula (1) include alkali metal salts of dialkyl sulfosuccinic acid, which are known as emulsifiers for emulsion polymerization. WO 2002/010237 A discloses that alkali metal salts of dialkyl sulfosuccinic acid may be added, for improvement of the mechanical stability and thermal stability, to an aqueous dispersion of fluororesin, which is obtained by emulsion polymerization of a fluoroolefin-containing monomer using a nonionic emulsifier and an anionic emulsifier.

Specific examples of Compound (1) include sodium dioctyl sulfosuccinate, sodium didecyl sulfosuccinate, sodium dihexyl sulfosuccinate, sodium diisobutyl sulfosuccinate, sodium diamyl sulfosuccinate, and ammonium dioctyl sulfosuccinate.

Examples of the usable hydrocarbon emulsifier excluding Compound (1) in the present invention include anionic emulsifiers such as alkyl benzene sulfonate salts, higher fatty acid salts, alkyl sulfate ester salts, alkyl sulfonate salts, and alkyl ether sulfate salts.

Specific examples thereof include hydrocarbon emulsifiers such as CH₃(CH₂)ₙSO₃M, CH₃(CH₂)ₘSO₄M, CH₃(CH₂)ₒCOOM, H (CH₂)pCOO(CH₂CH₂O)_{q}H, and (NaSO₃)CH((CH₂)ᵣCH₃)((CH₂)ₛCH₃) (in the formulae, M represents monovalent cation; n represents an integer of 2 to 16; m represents an integer of 2 to 16; o represents an integer of 2 to 16; p represents an integer of 2 to 40; q represents an integer of 2 to 45; r+s=10 to 20). Preferable among these are sodium dodecylsulfate, sodium dodecylsulfonate, sodium decylsulfate, sodium decylsulfonate, sodium tetradecylsulfate, and sodium tetradecanesulfonate, in terms of their low prices, and good water solubility and surface activity when used as emulsifiers.

The amount of the hydrocarbon emulsifier may be appropriately set according to the kind of the emulsifier. For example, the amount is preferably 10 to 100,000 ppm, more preferably 500 to 50,000 ppm, still more preferably 2,000 to 40,000 ppm, and particularly preferably 4,000 to 30,000 ppm, based on the total amount of water. The emulsifier in an amount of less than 10 ppm reduces the surface activity, which tends to decrease the number of particles to be generated.

Use of the hydrocarbon emulsifier alone enables sufficiently stable progress of emulsion polymerization. Alternatively, use of the hydrocarbon emulsifier along with a fluorine-containing emulsifier or unfluorinated nonionic emulsifier is allowed provided that the amount of the additional emulsifier is small.

According to the production method of the present invention, emulsion polymerization proceeds even in the absence of an emulsifier. However, use of an emulsifier enables the resulting emulsion to have smaller particles and better stability. Among various emulsifiers, the hydrocarbon emulsifier is particularly preferably used in terms of cost reduction.

The polymerization temperature is not particularly limited and the most suitable temperature is selected according to the type of the polymerization initiator. However, too high a polymerization temperature may easily reduce the density of monomers at the gas phase or may cause chain branching reaction to the resulting copolymer, thereby preventing production of the desired copolymer. Thus, the polymerization temperature is preferably 40 to 120°C, and more preferably 50 to 100°C.

Addition of the monomers may be carried out continuously or in stages.

Oil soluble peroxides are also usable as the polymerization initiator. However, peroxy carbonates such as diisopropyl peroxydicarbonate (IPP) and di-n-propyl peroxydicarbonate (NPP), which are typical oil soluble initiators, have some problems such as risk of explosion, their high prices, and possibility of scale adhering to the wall of a polymerization vessel during polymerization reaction. Accordingly, water soluble radical polymerization initiators are more preferable for further reduction of the permanent compression set of the fluoropolymer. Examples of the water soluble radical polymerization initiator include ammonium salts, potassium salts, and sodium salts or the like of persulfuric acid, perboric acid, perchloric acid, perphosphoric acid, and percarbonic acid. In particular, ammonium persulfate and potassium persulfate are preferable.

The amount of the polymerization initiator is not particularly limited and may be set not to below the amount reducing the polymerization velocity dramatically (e.g. several ppm relative to water). The polymerization initiator may be added at once at the initial stage of polymerization, or may be added in stages or continuously. The upper limit of the amount is set to the range such that the heat of polymerization reaction can be removed from the surface of a polymerization vessel.

In the production method of the present invention, a molecular weight modifier or the like may be further used. The molecular weight modifier may be added at once at the initial stage, or may be added continuously or in stages.

Examples of the molecular weight modifier include esters such as dimethyl malonate, diethyl malonate, methyl acetate, ethyl acetate, butyl acetate, and dimethyl succinate. The examples also include isopentane, isopropanol, acetone, mercaptans, carbon tetrachloride, cyclohexane, monoiodomethane, 1-iodomethane, 1-iodopropane, isopropyl iodide, diiodomethane, 1,2-diiodomethane, and 1,3-diiodopropane.

In addition, other additives such as buffers may be optionally added, the amount of which is preferably set so as not to inhibit the effects of the present invention.

The polymerization pressure may be appropriately set in the range of 0.1 to 10 MPa, and more preferably 0.2 to 8 MPa. The polymerization pressure may be low (0.1 to 1 MPa) or high (1 to 10 MPa) as far as staying in these ranges.

Stirring may be performed using an anchor blade, turbine blade, pitched blade, or the like, and preferable are large blades such as FULLZONE and MAXBLEND in terms of better diffusion of monomers and better dispersion stability of a polymer. Both a horizontal stirrer and a vertical stirrer are usable.

The production method of the present invention enables production of an emulsion of a perhaloolefin-vinyl acetate copolymer containing particles that have a small particle size and stability in the emulsion. The perhaloolefin-vinyl acetate copolymer produced by the production method of the present invention preferably has a particle size (average particle diameter) of 10 to 400 nm, and more preferably 40 to 380 nm.

The particle size is determined using a laser light scattering particle size analyzer (product of Otsuka Electronics Co., Ltd., trade name: ELS-3000).

The perhaloolefin-vinyl acetate copolymer produced by the production method of the present invention preferably has a glass transition temperature of 20 to 80°C, and more preferably 30 to 70°C.

The glass transition temperature is measured using a differential scanning calorimeter (DSC).

### EXAMPLE

The present invention is now specifically described with reference to, but not limited to, the following examples.

Following physical properties were measured using the devices below.

### (Particle size of copolymer)

Measurement was performed using a laser light scattering particle size analyzer (product of Otsuka Electronics Co., Ltd., trade name: ELS-3000).

### (Glass transition temperature of copolymer)

Measurement was performed using a differential scanning calorimeter (DSC).

### Example 1

A 0.5-L stainless steel autoclave was charged with pure water (250 g), sodium dodecylsulfate (SDS) (0.138 g, 554 ppm relative to the polywater), and vinyl acetate (VAc) (5.8 g), and the atmosphere in the autoclave was substituted with nitrogen. Then, tetrafluoroethylene (TFE) (5 g) was added and the mixture in the vessel was heated to 80°C. Subsequently, TFE (4 g) was added thereto. The pressure in the vessel at this point was 0.800 MPa. To the resulting vessel, a 1.0 mass% aqueous solution of ammonium persulfate (APS) (2.5 g) was added under stirring to initiate a reaction. At the beginning of the reaction, further addition of VAc was started. The VAc was added in an amount of 18.7 g over four hours. During the reaction, TFE was continuously added using an electromagnetic valve. The stirring speed was 700 rpm.

When the pressure in the vessel reached 0.800 MPa by consumption of TFE, the electromagnetic valve was automatically opened to add TFE. When the pressure reached 0.775 MPa, the electromagnetic valve was automatically closed to stop the addition of TFE. Thus, the addition of TFE and the pressure in the vessel were controlled.

The addition of vinyl acetate was terminated at four hours after the reaction initiation. Then, the vessel was returned to normal temperature and pressure to terminate the polymerization, and thereby yielding an emulsion of a TFE/VAc copolymer (306 g, solids content concentration: 16 mass%). The emulsion after the polymerization had no precipitation.

The resulting TFE/VAc copolymer had a glass transition temperature of 30°C and a particle size of 82 nm.

### Example 2

A 0.5-L stainless steel autoclave was charged with pure water (250 g) and VAc (5.8 g), and the atmosphere in the autoclave was substituted with nitrogen. Then, TFE (4 g) was added and the mixture in the vessel was heated to 80°C. Subsequently, TFE (3 g) was added. The pressure in the vessel at this point was 0.800 MPa. To the resulting vessel, a 0.2 mass% aqueous solution of APS (2.5 g) was added under stirring to initiate a reaction. Further addition of VAc was started at the beginning of the reaction. The VAc was added in an amount of 7.1 g over two hours. During the reaction, TFE was continuously added using an electromagnetic valve. The stirring speed was 700 rpm.

When the pressure in the vessel reached 0.800 MPa by consumption of TFE, the electromagnetic valve was automatically opened to add TFE. When the pressure reached 0.775 MPa, the electromagnetic valve was automatically closed to stop the addition of TFE. Thus, the addition of TFE and the pressure in the vessel were controlled.

The addition of TFE and VAc was terminated at two hours after the reaction initiation. Then, the product in the vessel was returned to normal temperature and pressure to terminate the polymerization, and thereby yielding an emulsion of a TFE/VAc copolymer (272 g, solids content concentration: 6.2 mass%). The emulsion after the polymerization had no precipitation.

The resulting TFE/VAc copolymer had a glass transition temperature of 35°C and a particle size of 213 nm.

### Example 3

A 0.5-L stainless steel autoclave was charged with pure water (250 g) and VAc (4.7 g), and the atmosphere in the autoclave was substituted with nitrogen. Then, chlorotrifluoroethylene (CTFE) (36 g) was added and the mixture in the vessel was heated to 60°C. Subsequently, a 2.0 mass% aqueous solution of APS (2.5 g) was added to the vessel under stirring to initiate a reaction. Further addition of VAc was started at the beginning of the reaction. The VAc was added in an amount of 6.1 g over one hour. The stirring speed was 700 rpm.

The addition of VAc was terminated at one hour after the reaction initiation. Then, the product in the vessel was returned to normal temperature and pressure to terminate the polymerization, and thereby yielding an emulsion of a CTFE/VAc copolymer (276 g, solids content concentration: 4.3 mass%). The emulsion after the polymerization had no precipitation.

The resulting CTFE/VAc copolymer had a glass transition temperature of 62°C and a particle size of 370 nm.

## Claims

1. A method for producing a perhaloolefin-vinyl acetate copolymer, comprising the step of
emulsion polymerization of at least a perhaloolefin having two carbon atoms and vinyl acetate in the presence of a hydrocarbon emulsifier or in the absence of an emulsifier, provided that the hydrocarbon emulsifier excludes a compound (1) represented by the formula (1):
[Chem. 1] 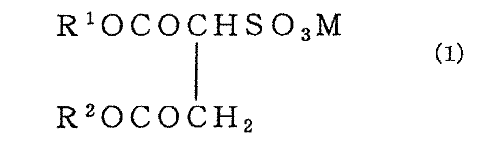
wherein R¹ and R² are the same as or different from each other and each represent a C4 to 12 unfluorinated saturated hydrocarbon group; M represents an alkali metal, an ammonium salt, or an amine salt.

2. The production method according to claim 1,
wherein the emulsion polymerization is carried out in the presence of the hydrocarbon emulsifier.

3. The production method according to claim 2,
wherein the hydrocarbon emulsifier is an anionic emulsifier.

4. The production method according to claim 2 or 3,
wherein the hydrocarbon emulsifier contains an alkyl benzene sulfonate salt, higher fatty acid salt, alkyl sulfate ester salt, alkyl sulfonate salt, or alkyl ether sulfate salt.

5. The production method according to any one of claims 2 to 4,
wherein the hydrocarbon emulsifier contains sodium dodecylsulfate, sodium dodecylsulfonate, sodium decylsulfate, sodium decylsulfonate, sodium tetradecylsulfate, or sodium tetradecanesulfonate.

6. The production method according to any one of claims 1 to 5,
wherein an unfluorinated monomer is further copolymerized in addition to the perhaloolefin having two carbon atoms and vinyl acetate.

7. The production method according to claim 6,
wherein the unfluorinated monomer is at least one selected from the group consisting of olefins, vinyl ethers, and vinyl esters.

8. The production method according to claim 7,
wherein the unfluorinated monomer contains a monomer containing a crosslinkable group and a monomer not containing a crosslinkable group.

9. The production method according to claim 8,
wherein the monomer containing a crosslinkable group is a hydroxyl group-containing vinyl monomer or an unsaturated carboxylic acid.
